Europäisches Patentamt

**European Patent Office**

**Office européen des brevets**

(19)

(11) Numéro de publication: **0 099 870**
A2

(12) **DEMANDE DE BREVET EUROPEEN**

(21) Numéro de dépôt: **83870068.0**

(22) Date de dépôt: **27.06.83**

(51) Int. Cl.³: **F 16 L 59/16**

(30) Priorité: **06.07.82 BE 208538**

(43) Date de publication de la demande:
**01.02.84 Bulletin 84/5**

(84) Etats contractants désignés:
**DE FR GB NL**

(71) Demandeur: **INSTITUT D'ENSEIGNMENT SPECIAL A.S.B.L.**
**rue du Saulchoir, 56**
**B-7540 Kain(BE)**

(72) Inventeur: **Canivet, Gérard**
**17, rue Joseph Hoyois**
**7500 Tournai(BE)**

(74) Mandataire: **Fobe, Edouard et al,**
**Bureau VANDER HAEGHEN 63, Avenue de la Toison d'Or**
**B-1060 Bruxelles(BE)**

(54) **Enveloppe isolante pour calorifuger des vannes et/ou des parties de tuyauteries.**

(57) Selon l'invention, l'enveloppe (1) rembourrée formant manteau est relativement épaisse; deux bords opposés de ladite enveloppe peuvent être amenés à se joindre en venant en contact face à face. Le joint peut être couvert par une bavette extérieure (2a) attachée à l'un des bords (2c) de la surface extérieure (1a) de l'enveloppe. L'enveloppe (1) peut être appliquée, aux parties à isoler, par-dessus, et comporter alors une ouverture centrale, ou par-dessous, en la munissant alors d'échancrures. L'enveloppe peut être complétée par un col (5) amovible pour enfermer une vanne (11), par exemple.

FIG. 4

EP 0 099 870 A2

- 1 -                    0099870

L'invention est relative à une enveloppe souple, isolante, pour isoler des vannes et/ou des parties de tuyauteries d'une installation à calorifuger, contenant un rembourrage isolant et équipée de sangles de retenue permettant de la maintenir serrée autour de la partie à isoler.

Il est connu de calorifuger des vannes et/ou des parties de tuyauteries en les entourant d'un matelas formé d'une enveloppe contenant un rembourrage isolant, par exemple de laine de verre. Ces matelas qui ont souvent une relativement grande longueur afin de leur permettre d'être enroulés en plusieurs tours autour des parties de tuyauteries et de vanne à calorifuger, ont l'inconvénient de présenter nécessairement des parties qui se recouvrent lors de leur pose, créant ainsi des surépaisseurs disgracieuses et où, surtout, la matière est mal employée, ce qui accroît le coût du calorifugeage. En outre, ils sont d'un placement difficile et il est nécessaire de les dérouler entièrement si l'on veut accéder au chapeau de la vanne ou au bourrage traversé par la tige de celle-ci. Ces manipulations répétées détériorent bientôt les bords du matelas et entraînent sa mise au rebut prématurée. Il peut arriver aussi que la vanne ne soit pas étanche et que le liquide parfois corrosif qui circule dans les tuyauteries vienne en contact avec le matelas calorifuge et le détériore rapidement.

Tous ces inconvénients sont écartés par les dispositions suivant l'invention, laquelle se rapporte à diverses améliorations apportées à la technique des enveloppes isolantes.

Suivant une première amélioration, s'appliquant notamment lorsque l'installation à protéger comprend une vanne et des tuyauteries adjacentes, l'enveloppe comprend deux éléments indépendants, susceptibles d'être reliés entre eux par des sangles et propres chacun à couvrir une partie différente de l'installation à calorifuger, laquelle peut comprendre notamment une vanne et des tuyauteries adjacentes.

Plus spécifiquement, le premier élément constitue un manteau propre à s'appliquer autour du corps d'une vanne et sur les extrémités adjacentes d'une tuyauterie qui y est reliée, tandis que l'autre élément constitue un col propre à être posé sur le premier élément, en entourant le chapeau de la vanne.

Cette disposition est très avantageuse parce qu'elle permet un calorifugeage optimal en épousant toutes les formes de la tuyauterie et de la vanne. L'enlèvement du col est une opération simple et rapide et il permet l'accès direct au bourrage de la vanne sans qu'il soit nécessaire d'enlever l'ensemble de calorifugeage, comme cela s'imposait autrefois. La vie de ce calorifugeage est donc considérablement augmentée.

Le manteau suivant l'invention peut être réalisé notamment sous deux formes différentes présentant chacune des avantages particuliers. Dans l'une de ces formes, le manteau est fait d'une pièce sensiblement rectangulaire, présentant sur chacun des deux côtés opposés à rapprocher autour de la partie supérieure d'une vanne, des échancrures à bords arrondis qui dessinent, par leur rapprochement, un contour courbe fermé, de dimensions suffisantes pour embrasser le chapeau d'une vanne à sa base. On connaissait déjà des matelas isolants en forme de rectangles allongés, présentant sur deux côtés opposés des échancrures appelées à entourer la tige d'une vanne après enroulement du matelas autour du corps de celle-ci.

- 3 -                    0099870

Dans cette disposition connue, le matelas présentait, attachées à proximité des coins de l'une des échancrures, des sangles qui, une fois tendues, exerçaient des tractions obliques sur leurs points d'attache, ce qui pouvait provoquer à la longue un déchirement de leurs fixations. Dans la disposition conforme à l'invention, qui ne prévoit aucun recouvrement partiel, ce danger est évité. La première forme de réalisation qui a été décrite plus haut a l'avantage de permettre un placement facile du manteau et la disposition de ses sangles, qui sera décrite plus complètement ci-après, permet un serrage facile et symétrique. Cette forme de réalisation permet également de placer le manteau autour d'une vanne munie d'un grand volant. Enfin, sa fabrication est simple.

Dans une autre forme de réalisation, l'invention envisage un manteau de forme rectangulaire, percé d'un passage, que l'on peut enfiler autour de la partie supérieure de la vanne lors de la pose du manteau. Cette forme de réalisation présente, par rapport à celle qui a été décrite précédemment, une isolation meilleure car la fermeture est plus hermétique du côté du bourrage de la vanne. La mise en place du manteau est aussi un peu plus facile.

Suivant une autre amélioration, l'enveloppe comprend au moins un élément formant manteau propre à s'appliquer autour du corps d'une vanne ou d'une autre partie à isoler telle que l'ensemble de deux brides d'assemblage de tuyauteries, ce manteau présentant sur deux côtés opposés des surfaces limitant l'épaisseur du manteau, propres à être amenées en contact l'une de l'autre lorsque le manteau est pressé autour de la partie à isoler, et le manteau présente sur ses deux autres côtés opposés des bavettes latérales propres à s'appliquer sur les parties de la tuyauterie situées de part et d'autre de ladite vanne ou autre partie à isoler, et à être serrées sur ces parties au moyen de sangles fixées aux bavettes respectives.

Cette disposition assure une meilleure adaptation du calorifugeage aux tuyauteries que les dispositions connues autrefois, dans lesquelles les sangles de serrage entouraient le corps même du calorifugeage en le déformant.

Il est évident que si l'on veut appliquer l'invention au calorifugeage d'un assemblage de tuyaux à brides, il ne sera nécessaire de prévoir dans le manteau ni échancrure, ni passage plus ou moins central à travers l'enveloppe. Lorsque le manteau sert à envelopper une vanne, ces échancrures ou ce passage constituent des points de repère qui permettent la mise en place immédiate et toujours esthétique du manteau de calorifugeage.

L'invention sera décrite plus en détail ci-après dans deux formes de réalisation et dans la forme combinée dans laquelle au manteau proprement dit s'ajoute un col. D'autres particularités encore apparaîtront au cours de cette description.

On se référera maintenant aux dessins sur lesquels :

- la figure 1 représente un manteau comprenant une enveloppe échancrée;

- la figure 2 représente en perspective le manteau de la figure 1 placé sur une tuyauterie;

- la figure 3 est une vue en plan du manteau dans une deuxième forme de réalisation;

- la figure 4 est une vue en élévation du manteau de la figure 3, mis en place autour d'une vanne et surmonté de son col;

- la figure 5 est une vue en plan du col et de ses moyens de fixation;

- la figure 6 représente en perspective le moyen de fixation du manteau autour d'une tuyauterie (non montrée) et montre la disposition des sangles de serrage des bavettes.

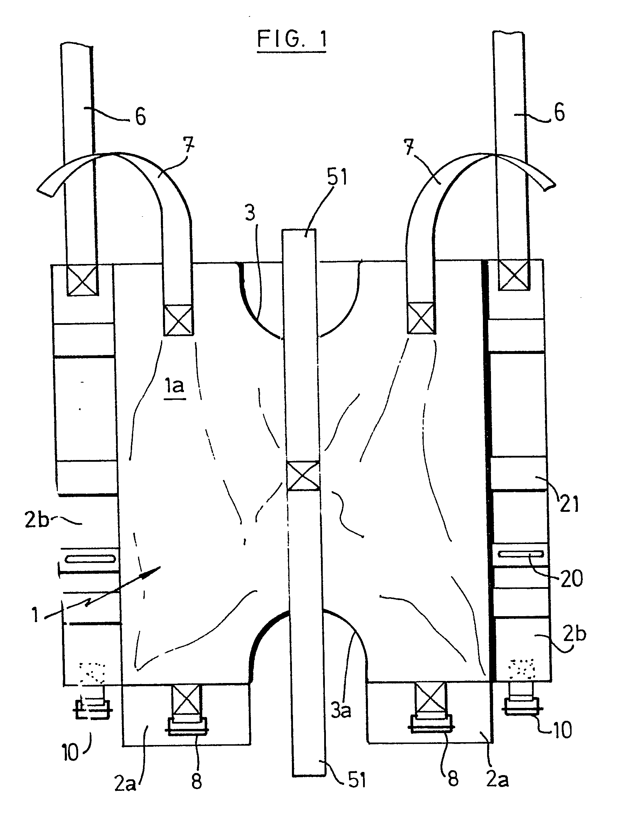

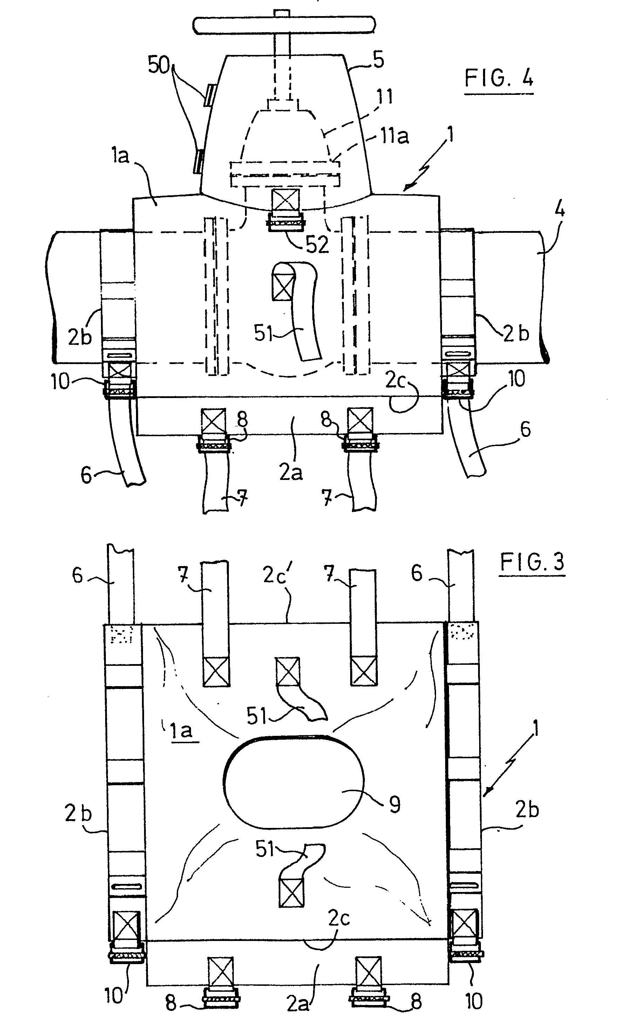

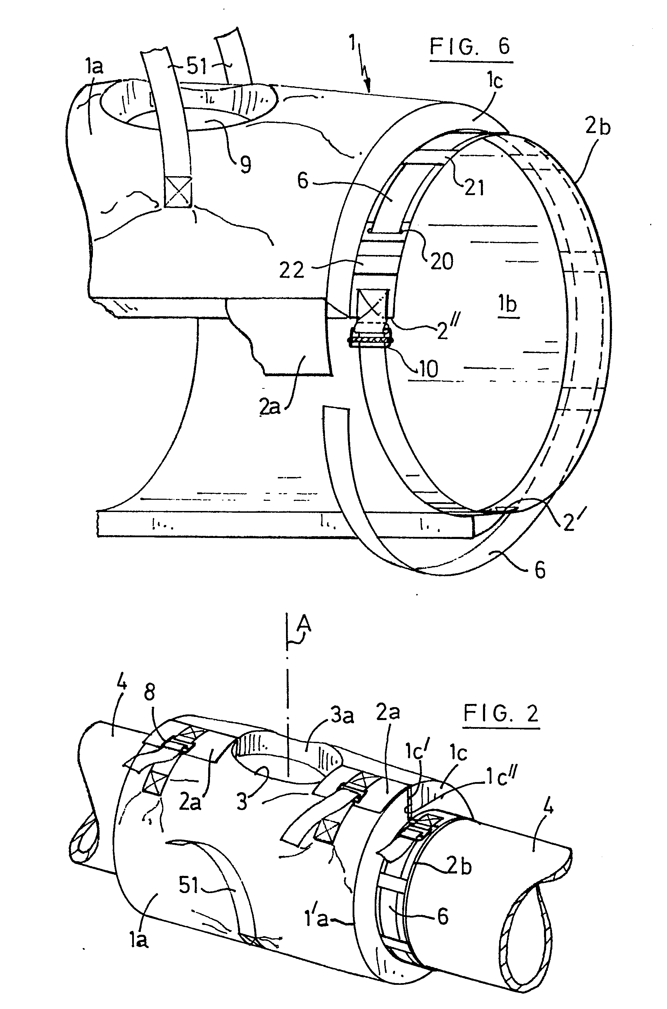

Le manteau tel que représenté sur toutes les figures et plus particulièrement à la figure 1 est formé d'une enveloppe 1 présentant une face dite extérieure 1a (seule visible à la figure 1) et une face opposée, dite intérieure, 1b, qui s'applique contre la tuyauterie, et qui est visible à la figure 6. Ces deux faces de l'enveloppe sont reliées l'une à l'autre par des faces latérales telles que visibles en 1c, à la figure 6 et à la figure 2, formant ainsi un parallélipipède rectangle. Dans l'intérieur de l'enveloppe ainsi constituée et qui peut être faite de tout tissu approprié se trouve un rembourrage de laine de verre (non visible aux dessins). Des piqûres locales ou d'autres moyens de liaison (non montrés) peuvent servir à relier l'une à l'autre, de place en place, les surfaces de grande étendue du manteau, de facon à empêcher le mouvement de la garniture intérieure, comme il est d'usage d'ailleurs de toute espèce de matelas.

Un élément important de l'invention est constitué par des bavettes, 2, fixées aux bords des surfaces de l'enveloppe. Certaines de ces bavettes seront fixées à des bords de la surface extérieure de l'enveloppe. C'est le cas des bavettes 2a que l'on voit notamment aux figures 1, 2 et 3. D'autres bavettes 2b, visibles aux figures 1, 2, 3, 4 et 6 sont fixées à la surface intérieure 1b de l'enveloppe, destinée à s'appliquer contre la tuyauterie.

Les figures 1 et 2 représentent la première forme de réalisation de l'invention, dans laquelle le manteau comporte deux échancrures opposées 3 et 3a. A la figure 2, on voit ce manteau monté autour d'une tuyauterie 4, pour entourer une vanne (non représentée sur la figure) et dont l'axe de la tige est désigné par A. On voit clairement à la figure 2 que lors du rapprochement des bords échancrés, les faces 1c' et 1c'' de petites dimensions, qui relient entre elles les deux surfaces de grande étendue du manteau, viennent étroitement en regard l'une de l'autre en formant un joint qui peut être protégé, assurant ainsi un calorifugeage complet. Le joint est protégé extérieurement par le rabattement, sur lui, des bavettes 2a attachées à la surface extérieure de l'enveloppe de part et d'autre de l'échancrure 3a.

On remarque également à la figure 1 les bavettes latérales 2b qui, comme montré à la figure 2, seront serrées contre la tuyauterie 4 par des sangles 6, suivant un détail qui sera examiné dans la suite. La figure 2 montre encore des sangles 7 fixées à la surface extérieure du manteau, coopérant avec des boucles 8 fixées aux parties de bavette 2a.

Les figures 3 et 4 représentent une autre forme de réaslisation du manteau suivant l'invention. Dans cette disposition, il n'y a plus d'échancrures aux bords latéraux de l'enveloppe, mais celle-ci comporte, à peu près en son centre, un passage 9 suffisamment grand pour embrasser la base d'une vanne. Le manteau est complété par une bavette 2a à laquelle sont fixées des boucles 8, par des sangles 7 appelées à coopérer avec les boucles 8 fixées à la bavette 2a et par des bavettes latérales 2b équipées de leurs sangles 6 respectives et de boucles 10 correspondantes. La figure 4 montre le manteau mis en place autour d'une vanne 11. Le manteau a été placé de façon que son passage 9 s'enfile sur le chapeau 11a de la vanne; les bords 2c, 2c' de l'enveloppe n'ont pas été montrés rapprochés l'un de l'autre sur la figure 4 où le manteau n'a pas encore été fermé par le bas. Lorsque cette fermeture aura lieu, les bords 2c, 2c' seront appliqués l'un contre l'autre et le serrage du manteau sera assuré ensuite par la coopération des boucles 8 et des sangles 7. La bavette 2a qui est fixée à la surface extérieure 1a du manteau couvrira le joint, comme déjà dit à propos de la figure 2.

Dans les dispositions des figures 1, 2, 3 et 4, les bavettes latérales 2b seront serrées autour de la tuyauterie. A cette fin, elles sont munies de sangles 6 dont la figure 6 indique le mode de montage. Chaque sangle 6 est attachée au bord 2' de la bavette 2b correspondante. La sangle 6 s'engage ensuite en dessous du bord opposé 2'' de cette même bavette. Elle ressort à l'exérieur en passant à travers une fente 20 pratiquée en un endroit quelconque de la bavette, puis entoure cette bavette sur tout son pourtour, vient s'introduire par son extrémité libre dans la boucle 10 fixée à l'extrémité 2'' de la bavette, pour passer finalement en dessous d'un passant 22 qui l'empêche de pendre vers l'exérieur.

Comme les tuyauteries sont en général calorifugées, les bavettes latérales s'appliqueront contre l'extrémité de ce calorifugeage. Dans ces conditions, pour éviter une discontinuité d'épaisseur, il y a intérêt à attacher la bavette le long de l'arête (indiquée par 1'a à la figure 2) du bord de la surface extérieure du manteau.

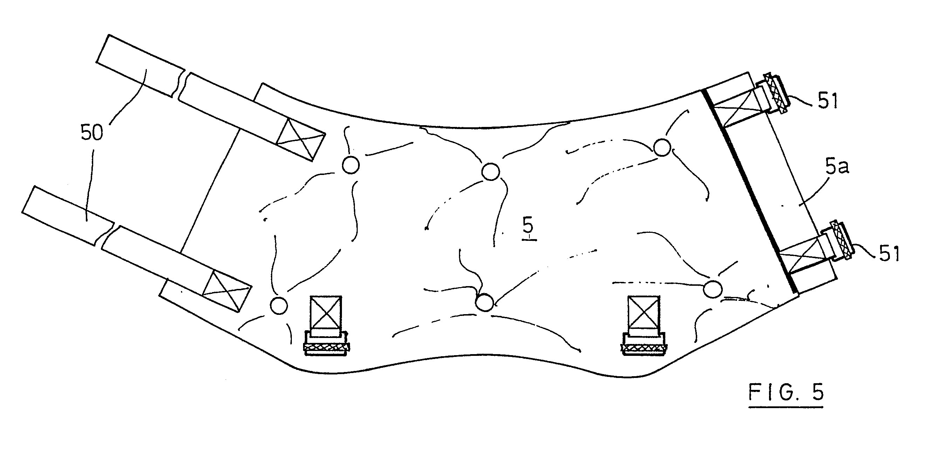

La figure 5 montre en élévation latérale une disposition particulièrement intéressante dans laquelle le manteau 1 est complété par un col 5. La forme de celui-ci, qui est grossièrement rectangulaire mais qui, en fait, représente plutôt le développement d'un tronc de cône, est visible à la figure 5. On y voit que la surface supérieure du col 5 est équipée d'un côté d'une bavette 5a, portant des moyens d'attache à sangles 50 et à boucles 51 suivant une disposition qui imite celle des sangles de fermeture supérieures visibles à la figure 2. Des sangles 51 seront, dans cette forme de réalisation, fixées à la surface extérieure du manteau 1 pour permettre leur passage dans des boucles 52 fixées à la surface extérieure du col 5. Une disposition du même genre peut s'appliquer à la forme de réalisation de la figure 2 où l'on voit seulement des sangles 51 et où l'on n'aperçoit pas le col.

On comprend que la disposition avec manteau et col permet, en cas de détérioration accidentelle du col, de remplacer celui-ci sans avoir à toucher au manteau et sans remplacer celui-ci. Cette solution est donc très économique.

REVENDICATIONS

1. Enveloppe (1) souple, isolante, pour isoler des vannes et/ou des parties de tuyauteries d'une installation à calorifuger, contenant un rembourrage isolant et équipée de sangles de retenue permettant de la maintenir serrée autour de la partie à isoler, caractérisée en ce qu'elle comprend deux éléments indépendants, susceptibles d'être reliés entre eux par des sangles (51) et propres chacun à couvrir une partie différente de l'installation à calorifuger, laquelle peut comprendre notamment une vanne (11) et des tuyauteries adjacentes (4).

2. Enveloppe suivant la revendication 1, caractérisée en ce que chacun des éléments de l'enveloppe (1) est constitué d'un parallélipipède rectangle dont deux des quatre faces opposées qui limitent l'épaisseur de l'enveloppe sont propres à être amenées en contact l'une de l'autre lorsque l'enveloppe (1) est pressée autour de la partie à isoler, en formant un joint.

3. Enveloppe suivant la revendication 1, caractérisée en ce que le premier élément réalisé de préférence suivant la revendication 2, constitue un manteau propre à s'appliquer autour du corps d'une vanne (11) et sur les extrémités adjacentes d'une tuyauterie (4) qui y est reliée, tandis que l'autre élément, de préférence suivant la revendication 2, constitue un col propre à être posé sur le premier élément, en entourant le chapeau (11a) de la vanne.

4. Enveloppe suivant l'une quelconque des revendications 1 à 3, dans laquelle l'élément constituant manteau est formé d'une partie d'enveloppe (1) présentant des échancrures (3 et 3a) sur chacun des deux côtés opposés à rapprocher l'un de l'autre autour de la partie supérieure d'une vanne, caractérisée en ce que les deux échancrures (3 et 3a) sont de forme arrondie et dessinent par leur rapprochement, lorsque le manteau est monté autour d'une vanne (11), un contour courbe fermé, de dimensions suffisantes pour embrasser le chapeau de la vanne à sa base.

5. Enveloppe suivant l'une quelconque des revendications 1 à 3, caractérisée en ce que l'élément constituant manteau présente, dans les surfaces opposées, relativement étendues, du parallélipipède rectangle qui le constitue, des ouvertures (3 - 3a) se faisant face, dessinant un contour fermé et reliées en leurs bords par une bande susceptible d'entourer le chapeau (11a) d'une vanne (11) à sa base.

6. Enveloppe souple, isolante, pour isoler des vannes et/ou des parties de tuyauteries d'une installation à calorifuger, contenant un rembourrage isolant et équipée de sangles de retenue permettant de la maintenir serrée autour de la partie à isoler, caractérisée en ce qu'elle comprend au moins un élément (1) formant manteau propre à s'appliquer autour du corps d'une vanne (11) ou d'une autre partie à isoler telle que l'ensemble de deux brides d'assemblage de tuyauteries (4), ce manteau présentant sur deux côtés opposés des surfaces (2a) limitant l'épaisseur du manteau, propres à être amenées en contact l'une de l'autre lorsque le manteau est pressé autour de la partie à isoler, et en ce que le manteau présente sur ses deux autres côtés opposés des bavettes latérales (2b) propres à s'appliquer sur les parties de la tuyauterie (4) situées de part et d'autre de ladite vanne ou autre partie à isoler, et à être serrées sur ces parties au moyen de sangles fixées aux bavettes respectives.

7. Enveloppe suivant la revendication 6, caractérisée en ce que chaque bavette latérale (2b) est attachée au manteau (1) le long d'une arête du manteau appartenant à sa surface extérieure (1a), en recouvrant le joint formé entre le manteau et la partie adjacente de l'installation à calorifuger, de manière à assurer une continuité du calorifugeage.

- 11 -

0099870

8. Enveloppe présentant en association les particularités des revendications 1, 2 et 6.

9. Enveloppe suivant l'une quelconque des revendications précédentes, comportant le long d'une des arêtes d'un bord (2c) d'au moins un des éléments qui la constituent, propre à venir en contact avec un bord opposé (2c') en formant un joint, une bavette extérieure (2a) susceptible d'être rabattue au-dessus de ce joint.

10. Enveloppe suivant l'une quelconque des revendications précédentes, présentant une bavette (5a) le long d'un premier bord quelconque appelé à venir en contact avec un second bord opposé et à être serré contre celui-ci à l'aide d'un système de sangles (50) et de boucles (51), caractérisée en ce que l'un des éléments de ce système de serrage, - sangle ou boucle -, est attaché à ladite bavette (5a).

FIG. 1

0099870

FIG. 4

FIG. 3

FIG. 5

FIG. 6

FIG. 2